(19) Europäisches Patentamt
European Patent Office
Office européen des brevets

(11) **EP 1 530 502 B1**

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(51) Int Cl.:
*B01D 63/16* *(2006.01)*   *B01D 65/08* *(2006.01)*
*B01D 33/21* *(2006.01)*   *B01D 61/20* *(2006.01)*

(21) Anmeldenummer: **03792302.6**

(22) Anmeldetag: **12.08.2003**

(86) Internationale Anmeldenummer:
**PCT/EP2003/008924**

(87) Internationale Veröffentlichungsnummer:
**WO 2004/018083 (04.03.2004 Gazette 2004/10)**

(54) **VERFAHREN ZUM FILTRIEREN VON FLÜSSIGKEITEN MIT EINER ROTATIONSFILTERVORRICHTUNG**

PROCESS FOR FILTERING LIQUIDS USING A ROTARY FILTER DEVICE

PROCEDE DE FILTRAGE DES LIQUIDES AVEC UN DISPOSITIF DE FILTRE TOURNANT

(84) Benannte Vertragsstaaten:
**AT BE BG CH CY CZ DE DK EE ES FI FR GB GR HU IE IT LI LU MC NL PT RO SE SI SK TR**

(30) Priorität: **22.08.2002 DE 10239247**

(43) Veröffentlichungstag der Anmeldung:
**18.05.2005 Patentblatt 2005/20**

(73) Patentinhaber: **Westfalia Separator AG**
**59302 Oelde (DE)**

(72) Erfinder:
• **FEUERPEIL, Hans-Peter**
**73529 Schwäbisch Gmünd (DE)**
• **BLÄSE, Dieter**
**73557 Mutlangen (DE)**
• **OLAPINSKI, Hans**
**73773 Aichwald (DE)**

(74) Vertreter: **Dr. Weitzel & Partner**
**Friedenstrasse 10**
**89522 Heidenheim (DE)**

(56) Entgegenhaltungen:
WO-A-02/05935       DE-A- 10 104 812
DE-A- 19 502 848       DE-C- 10 039 272

• **PATENT ABSTRACTS OF JAPAN vol. 1998, no. 09, 31. Juli 1998 (1998-07-31) -& JP 10 099611 A (TEERA BUNRI:KK), 21. April 1998 (1998-04-21)**

**Beschreibung**

Die Erfindung betrifft eine Vorrichtung zum Filtrieren von Flüssigkeiten. Eine solche Vorrichtung ist beispielsweise in DE 100 19 672 A1 beschrieben.

Vorrichtungen dieser Art dienen zur Querstrom-Permeation von fließfähigen Medien. Sie umfassen wenigstens zwei Wellen, auf denen jeweils viele scheibenförmige Membrankörper parallel zueinander und in gegenseitigem Abstand angeordnet sind. Die Wellen sind hohl, und die Membranscheiben bestehen aus keramischem Material und sind von Radialkanälen durchzogen. Zwischen den Radialkanälen und dem Innenraum der Hohlwelle besteht eine leitende Verbindung. Die zu filtrierende Flüssigkeit gelangt von außen durch das poröse Material des Membrankörpers in die Kanäle, und von dort aus in die Hohlwelle.

Die genannten Wellen verlaufen parallel zueinander, so daß auch die Membranscheiben zweier einander benachbarter Scheibenpakete parallel zueinander angeordnet sind. Dabei sind die Wellen derart dicht nebeneinander angeordnet, daß die Scheiben zweier Scheibenpakete verzahnungsartig ineinandergreifen.

Die Scheiben müssen nicht den genannten Aufbau aus porösem keramischem Material haben. Es gibt auch Anwendungsfälle, bei welchen einige Scheiben als sogenannte Dummy-Scheiben aufgebaut sind. Auch ist es denkbar, die Scheiben aus Siebkörpern herzustellen. Auch Kombinationen der genannten Bauarten sind denkbar, beispielsweise die Paarung Siebkörper-Membrankörper. Im folgenden soll nur von "Scheiben" gesprochen werden.

DE 100 39 272 C beschreibt ein Verfahren zum Herstellen eines plattenförmigen Filtrationskörpers. Diese Schrift zeigt auch einen Filtrationsapparat, bei dem sich mehrere Platten - in Draufsicht gesehen - überdecken.

JP 01 099611 A beschreibt eine Vorrichtung mit sich überlappenden Filterscheiben, angetrieben im gleichen Drehsinn und unterschiedliche Durchmesser aufweisend.

WO 02/05935 A beschreibt ebenfalls eine Filtervorrichtung mit mehreren gleichsinnig angetriebenen Filterscheiben, die einander überlappen und gleiche oder unterschiedliche Durchmesser aufweisen.

Gleich sinnig angetriebene Filterscheiben gleichen Durchmessers offenbaren die DE 101 04 812 A1 sowie die DE 195 02 848 A1.

Im Folgenden geht es um die Kombination wenigstens einer Membranscheibe mit wenigstens einer Turbulenzscheibe. Die Membranscheibe besteht aus einem keramischen Material, das porös ist. Die Scheibe weist außerdem in ihrem Inneren makroskopische Hohlräume auf. Diese stehen in leitender Verbindung mit dem Innenraum jener Hohlwelle, die die Membranscheibe trägt.

Die Turbulenzscheibe befindet sich auf einer separaten Welle, die ebenfalls hohl sein kann. In diesem Falle kann sie zur Zufuhr von unfiltriertem Medium dienen.

Die genannten Wellen mit den darauf sitzenden Scheiben sind in der Regel in einem Behälter angeordnet. Dieser enthält die zu behandelnde Flüssigkeit, die durch das Membranmaterial hindurchgesetzt werden soll und von welcher Filtrat zum Hohlraum der Hohlwelle gelangt und von dort aus abgeführt wird. Der Behälter ist in der Regel ein geschlossener Druckbehälter.

Bei der Filtration in einer Vorrichtung der genannten Art sind folgende Hauptforderungen zu erfüllen: Zum einen soll die Filtratqualität so hoch wie möglich sein. Dies bedeutet, dass aus dem zu filtrierenden Medium die abzutrennenden Stoffe möglichst vollständig abgetrennt werden. Zum anderen soll aber auch der Durchsatz so hoch wie möglich sein, das heißt die Menge des pro Zeiteinheit filtrierten Mediums.

Beide Forderungen stehen sich in der Praxis entgegen. Ist die Filtrationsqualität hoch, so ist der Durchsatz zwangsläufig gering.

Eine weitere Forderung ist die Forderung nach einer langen Standzeit. Unter Standzeit wird hierbei die Zeitspanne zwischen zwei Reinigungsvorgängen der Membranscheibe verstanden. Es bedeutet anders ausgedrückt die Zeitdauer zwischen zwei notwendigen Reinigungsvorgängen.

Will man den Durchsatz steigern, bei einer gegebenen Filtrationsqualität, so könnte man daran denken, den Druck im Druckgefäß zu steigern, um eine möglichst große Filtratmenge durch die Poren der Membran hindurchzupressen. Dies führt jedoch in manchen Fällen, beispielsweise bei Filtration von Gelatinelösungen oder Bier, zu einer Änderung der Filtratqualität sowie zu einer Verminderung des Fluxes. Man erreicht somit bei einer zu hohen Druckdifferenz zwischen Unfiltrat und Permeat nur das Gegenteil dessen, was man will.

Der Erfindung liegt die Aufgabe zugrunde, ein Verfahren zum betreiben einer Vorrichtung der eingangs beschriebenen Art derart zu gestalten, dass eine möglichst hohe Filtrationsqualität erzielt wird, bei möglichst hohem Durchsatz und langer Standzeit, ferner bei Betrieb der gesamten Membranfläche und ermöglicht optimalem und gleichem Trasmembrandruck. "Transmembrandruck" ist die Druckdifferenz, die zwischen Unfiltrat auf der Vorderseite des Filtermediums in Fließrichtung und der Filterscheibe, somit nach dem Durchtritt durch das Filtermedium herrscht.

Diese Aufgabe wird durch die Merkmale von Anspruch 1 gelöst.

Der Erfinder ist von folgenden Überlegungen ausgegangen:

Der Erfinder geht aus von Scheiben - eine Membranscheibe sowie eine benachbarte Turbulenzscheibe -, die sich in Draufsicht gesehen überlappen, und die außerdem im selben Drehsinn umlaufen.

Haben die Scheiben einen gleich großen Durchmesser, und laufen sie mit derselben Drehzahl um, so ist die Relativgeschwindigkeit zwischen den beiden Scheiben an jedem beliebigen Punkt des Überlappungsbereiches, das heißt in jedem beliebigen Abstand von der einen und der anderen Drehachse - gleich groß.

Da die Forderung nach möglichst konstantem und niedrigem Transmembrandruck besteht so darf der durch Zentrifugalkraft erzeugte Druckanstieg Pz innerhalb der Scheibe (von innen nach außen) einen bestimmten Wert nicht überschreiten. Das heißt, die Membranscheibe darf eine bestimmte Umfangsgeschwindigkeit nicht überschreiten. Andernfalls strömt filtriertes Medium im Umfangsbereich der Membranscheibe aus dieser in den Unfiltratraum zurück.

Die Forderung nach konstanter und zugleich sehr hoher Geschwindigkeitsdifferenz zwischen benachbarten, einander überlappenden Scheiben bei niedrigem, durch Zentrifugalkraft erzeugten Druckanstieg $P_z$, innerhalb der Membranscheibe lässt sich aber nur dann erfüllen, wenn die Membranscheibe nur langsam umläuft und die Turbulenzscheibe mit entsprechend höherer Geschwindigkeit.

Bei einem System, umfassend eine Membranscheibe und eine Turbulenzscheibe, geht es beispielsweise darum, die folgenden Forderungen zu erfüllen:

$\Delta V$ = Konstant (auf der Verbindungslinie zwischen der Rotationsachse einer Membranscheibe und der Rotationsachse einer Turbolenzscheibe)

$\Delta V$ = deutlich größer als 5 m/s

$p_z$ = < 0,1

Die Membranscheibe und die Turbulenzscheibe müssen bezüglich ihrer Durchmesser und ihrer Drehzahlen in einem bestimmten Verhältnis zueinander stehen.

Beispiel 1:

| | |
|---|---|
| Membranscheibendurchmesser | = 312 mm |
| Drehzahl der Membranscheibe | = 4.5 $s^{-1}$ |
| $V_{max}$ der Membranscheibe | = 3,92 m/s |
| $V_{min}$ der Membranscheibe | = 1,57 m/s |
| $p_z$ der Membranscheibe | = 0,15 bar |
| Angestrebtes $\Delta V$ | = 15 m/s |

Die Turbulenzscheibe muss in den Position $V_{min}$ beziehungsweise $V_{max}$ der Membranscheibe (in der jeweiligen Gegenrichtung). Geschwindigkeiten aufweisen, die eine Ergänzung zur Zielgeschwindigkeitsdifferenz bewirken ($\Delta V$ =15m/s).

Bei einem angestrebten $\Delta V$ von 15 m/s muss - beispielsweise bei einer Membranscheibe mit einem Durchmesser von 312 mm - in Position $V_{min}$ 15 -1,57 =13,43 m/s und in der Position $V_{max}$ 15 - 3,92 = 11,08 m/s durch die Turbulenzscheibe erzeugt werden.

Die maximale Geschwindigkeit auf der Turbulenzscheibe beträgt somit 13,43 m/s. Die geringere Geschwindigkeit der Turbulenzscheibe in der Position von $V_{max}$ der Membranscheibe (11,08 m/s) befindet sich auf $Radius_{max}$ der Turbulenzscheibe - (Position $V_{max}$-Position $V_{min}$) = $Radius_{max}$-(156 mm - 62,5 mm)

=$Radius_{max}$ - 93,5 mm

mit $\dfrac{Radius_{max} - 93,5\,mm}{Radius_{max}} = \dfrac{11,08}{13,43}$ folgt:

$Radius_{max}$ = 534,34 mm

Die Drehzahl der Turbulenzscheibe muss so gewählt werden, dass sich für $V_{max}$ eine Umfangsgeschwindigkeit von 13,43 m/s ergibt.

n 2Π r = 13,43 m/s, somit

n = 4 $s^{-1}$

Geänderte Forderungen bezüglich der Parameter

- maximales $p_z$
- gewünschte Differenzgeschwindigkeit
- Membranscheibengröße

führen zu entsprechenden Durchmessern und Drehzahlen für die Turbulenzscheibe.

Wenn hier von "Turbulenzscheibe" die Rede ist, so bedeutet dies, dass es sich um eine Scheibe handelt, die die Funktion der Turbulenzerzeugung besitzt. Sie kann aus Keramik, aber auch aus Metall usw. bestehen. Sie kann glatt, genoppt, gelocht usw. sein. Sie kann auf einer Vollwelle oder einer Hohlwelle angeordnet sein und sie kann zusätzlich die Funktion der Zufuhr von zu filtrierendem Medium oder Waschmedium übernehmen.

Beispiel II:

Membranscheibendurchmesser 312
$p_z$ = 0,15 bar
Drehzahl der Membranscheibe = 4,5 upm
$V_{max}$ der Membranscheibe = 3,92 m/s

| Differenzgeschwindigkeit m/s | Durchmesser der Dummyscheibe m | Drehzahl der Dummyscheibe upm |
|---|---|---|
| 8 | 0,512 | 4 |
| 10 | 0,671 | 4 |
| 15 | 1,07 | 4 |
| 20 | 1,466 | 4 |

Beispiel III:

Membranscheibendurchmesser 90 mm
$p_z$ = 0,15 bar
Drehzahl der Membranscheibe = 13,55
$V_{max}$ der Membranscheibe = 3,92 m/s

| Differenzgeschwindigkeit m/s | Durchmesser der Dummyscheibe M | Drehzahl der Dummyscheibe upm |
|---|---|---|
| 8 | 0,272 | 7 |
| 10 | 0,361 | 7 |
| 15 | 0,587 | 7 |
| 20 | 0,812 | 7 |

**Beispiele von Druckverhältnissön aufgrund von Zentrifugalkräften in Membranscheiben mit unterschiedlichen Durchmessern**

Die folgenden Übersichten zeigen den Zusammenhang zwischen $V_{min}$, $V_{max}$, $\Delta V$, $p_{zmax}$ und der Drehzahl der Membranscheiben (bei gleicher Drehzahl und gleicher Drehrichtung).

**Beispiel 1**

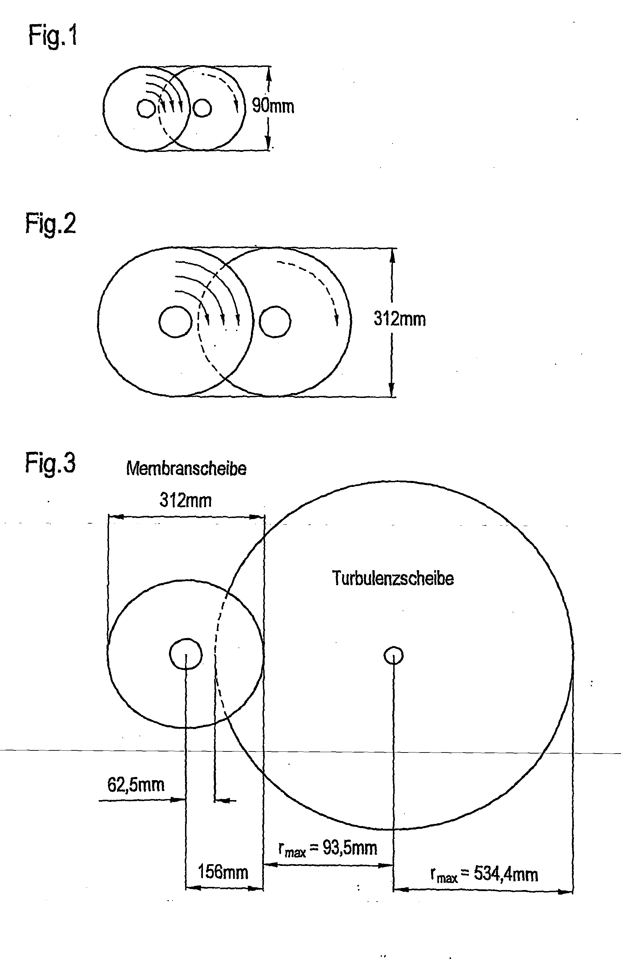

Beide Membranscheiben haben einen Durchmesser von 90 mm. Auf Figur 1 wird verwiesen.

| N ($s^{-1}$) | $V_{min}^{(ms-1)}$ | $V_{max}^{(ms-1)}$ | $\Delta V^{(ms-1)}$ | $p_z$ bar≈ |
|---|---|---|---|---|
| 2 | 0,28 | 0,56 | 0,84 | 0,004 |
| 5 | 0,71 | 1,41 | 2,12 | 0,018 |
| 10 | 1,41 | 2,83 | 4,24 | 0,08 |
| 15 | 2,12 | 4,24 | 6,36 | 0,18 |
| 20 | 2,83 | 5,65 | 8,48 | 0,35 |

(fortgesetzt)

| N (s$^{-1}$) | V$_{min}$$^{(ms-1)}$ | V$_{max}$$^{(ms-1)}$ | $\Delta$V$^{(ms-1)}$ | p$_z$ bar$\approx$ |
|---|---|---|---|---|
| 30 | 4,24 | 8,48 | 12,72 | 0,85 |

**Beispiel 2**

Beide Membranscheiben haben einen Scheibendurchmesser von 312 mm. Auf Figur 2 wird verwiesen.

| n (s$^{-1}$) | V$_{min}$$^{(ms-1)}$ | V$_{max}$$^{(ms-1)}$ | $\Delta$V$^{(ms-1)}$ | p$_z$ bar $\approx$ |
|---|---|---|---|---|
| 1 | 0,393 | 0,98 | 1,37 | 0,01 |
| 2 | 0,785 | 1,96 | 2,75 | 0,04 |
| 4 | 1,571 | 3,92 | 5,49 | 0,15 |
| 6 | 2,36 | 5,88 | 8,24 | 0,35. |
| 8 | 3,14 | 7,84 | 10,98 | 0,63 |
| 12 | 4,72 | 11,76 | 16,48 | 1,40 |

p$_z$ hängt nur von der Umfangsgeschwindigkeit der Membranscheibe ab. Im Falle der überlappenden Scheibe mit gleicher Drehrichtung und gleicher Drehzahl ist p$_z$ nur von $\Delta$V abhängig.

Für die Filtration bedeutet dies, dass bei nur geringem, zulässigem Transmembrandruck von beispielsweise 0,4 bar die Druckdifferenz innerhalb der Scheibe einen deutlich geringeren Betrag nicht überschreiten sollte, beispielsweise 0,15 bar. Damit darf $\Delta$V einen Wert von höchstens 5,49 m/s annehmen.

Höhere Geschwindigkeiten, die im Sinne höherer Turbulenz und besserer Filtrationsleistung wunschenswert wären, sind somit nicht zulässig.

Die Forderungen nach konstanter Geschwindigkeitsdifferenz zwischen den Scheiben, hoher Geschwindigkeitsdifferenz bei niedrigem p$_z$ innerhalb der Membranscheibe, lässt sich dann erfüllen, wenn die Membranscheibe nur langsam umläuft, beispielsweise mit weniger als 5 m/s, und die entsprechend höhere Geschwindigkeit von einer Turbulenzscheibe übernommen wird.

Um zum Beispiel in einem System Mebranscheibe - Turbolenzscheibe alle Forderungen zu erfüllen, nämlich

$\Delta$V = konstant
$\Delta$V » 5 m/s
p$_z$< 0,15... (in der Membranscheibe)

muss die Turbulenzscheibe in Bezug auf Durchmesser und Drehzahl in einem bestimmten Verhältnis zur Membranscheibe stehen.

Beispiel:

Membranscheibendurchmesser   = 312 mm
Drehzahl der Membranscheibe   = 4 s$^{-1}$
V$_{max}$ der Membranscheibe   = 3,92 m/s
V$_{min}$ der Membranscheibe   = 1,57 m/s
p$_z$ der Membranscheibe   = 0,15 bar
angestrebtes $\Delta$V   = 15 m/s

Die Turbulenzscheibe muss an den Positionen V$_{min}$ beziehungsweise V$_{max}$ der Membranscheibe (in der jeweiligen Gegenrichtung) Geschwindigkeiten besitzen, die die Ergänzung zur Zielgeschwindigkeit ($\Delta$V = 15 m/s) bewirken.

Bei einem Ziel $\Delta$V von 15 m/s muss in Position V$_{min}$ 15-1,57 = 13,43 m/s sein, und in Position V$_{max}$ 15 - 3,92 =11,08 m/s in Gegenrichtung erzeugt werden.

Ermitteln des "richtigen" Durchmessers der Turbulenzscheibe:

Die maximale Geschwindigkeit auf der Turbulenzscheibe beträgt 13,43 m/s. Die geringere Geschwindigkeit der Turbolenzscheibe an der Position von $V_{max}$ der Membranscheibe beträgt 11,08 m/s. Sie befindet sich auf $Radius_{max}$ - (Positon $V_{max}$ - Position $V_{min}$)

= $Radius_{max}$ - (156 mm - 62,5 mm)

somit bei = $Radius_{max}$- 93,5 mm

mit $\dfrac{Radius_{max} - 93,5\,mm}{Radius_{max}} = \dfrac{11,08}{13,43}$

($Radius_{max}$ - 93,5 mm) 13,43 =11,08 $V_{max}$

13,43 $Radius_{max}$-1255,7 mm = 11,08 $V_{max}$

2,35 $Radius_{max}$ = 1255,7 mm

$Radius_{max}$ = 534,34 mm

Auf Figur 3 wird verwiesen.

Die Drehzahl für die Turbulenzscheibe muss so gewählt werden, dass sich für $V_{max}$ eine Umfangsgeschwindigkeit von 13,43 m/s ergibt.

$$n \cdot 2\,\Pi\,V_{max} = 13,43\ \text{ms-1}$$

$$= \frac{13,43\,m^{s-1}}{0,53434\,m \cdot 2 \cdot \Pi} = 4,0\,s^{-1}$$

Geänderte Forderungen bezüglich der Parameter

- maximales $p_z$
- gewünschte Differenzgeschwindigkeit
- Membranscheibengröße

führen zu entsprechenden Durchmessern und Drehzahlen für die Turbulenzscheibe.

Membranscheibendurchmesser 312 mm

$p_z$=0,15 bar

Drehzahl der Membranscheibe = 4s$^{-1}$

$V_{max}$ der Membranscheibe =3,92 m/s

| Differenzgeschwindigkeit m/s | Durchmesser der Turbulenzscheibe M | Drehzahl der Turbulenzscheibe S$^{-1}$ |
|---|---|---|
| 8 | 0,512 | 4 |
| 10 | 0,671 | 4 |
| 15 | 1,07 | 4 |
| 20 | 1,466 | 4 |

Membranscheibendurchmesser 90 mm

$p_z$ = 0,15 bar

Drehzahl der Membranscheibe =13,5s$^{-1}$

$V_{max}$ der Membranscheibe =3,92 m/s

| Differenzgeschwindigkeit Membran-Turbulenzscheibe m/s | Durchmesser der Turbulenz-Scheibe M | Drehzahl der Turbulenzscheibe s$^{-1}$ |
|---|---|---|
| 8 | 0,272 | 7 |

(fortgesetzt)

| Differenzgeschwindigkeit Membran-Turbulenzscheibe m/s | Durchmesser der Turbulenz-Scheibe M | Drehzahl der Turbulenzscheibe s$^{-1}$ |
|---|---|---|
| 10 | 0,361 | 7 |
| 15 | 0,587 | 7 |
| 20 | 08,12 | 7 |

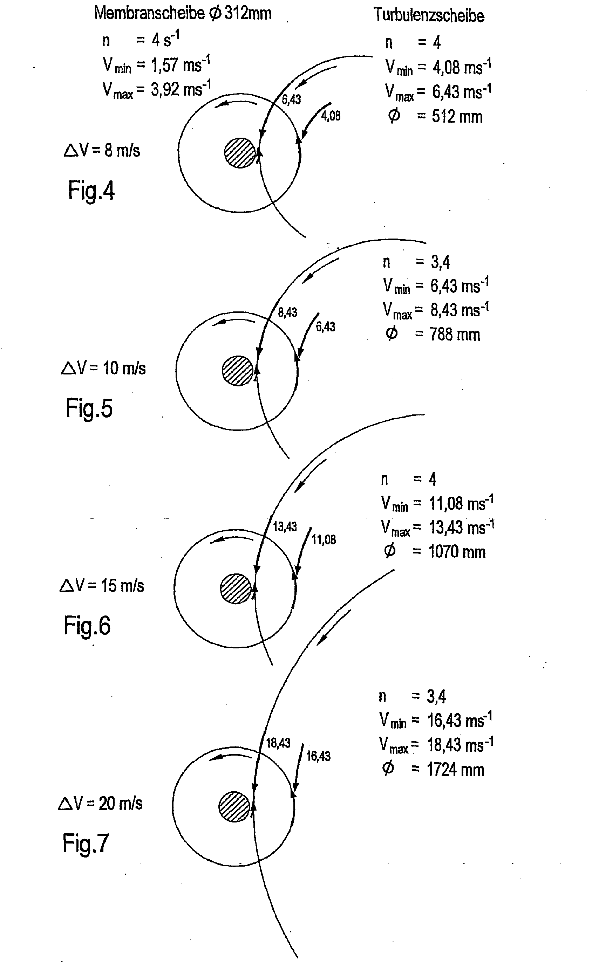

Die Figuren 4 bis 7 zeigen weitere Ausführungsbeispiele. Dabei sind jeweils zwei Scheiben dargestellt. Die links dargestellte Scheibe ist eine Membranscheibe. Sie hat in allen vier Fällen einen gleichgroßen Durchmesser, nämlich 312mm.

Die rechts dargestellte Scheibe ist eine Turbulenzscheibe. Sie ist in den genannten vier Figuren 4, 5, 6, 7 ungleichgroß; ihr Durchmesser beträgt 512,788,1070 und 1724mm.

Links neben der Membranscheibe sind die angestrebten Differenzgeschwindigkeiten Delta V aufgeführt: 8, 10, 15, 20m/s.

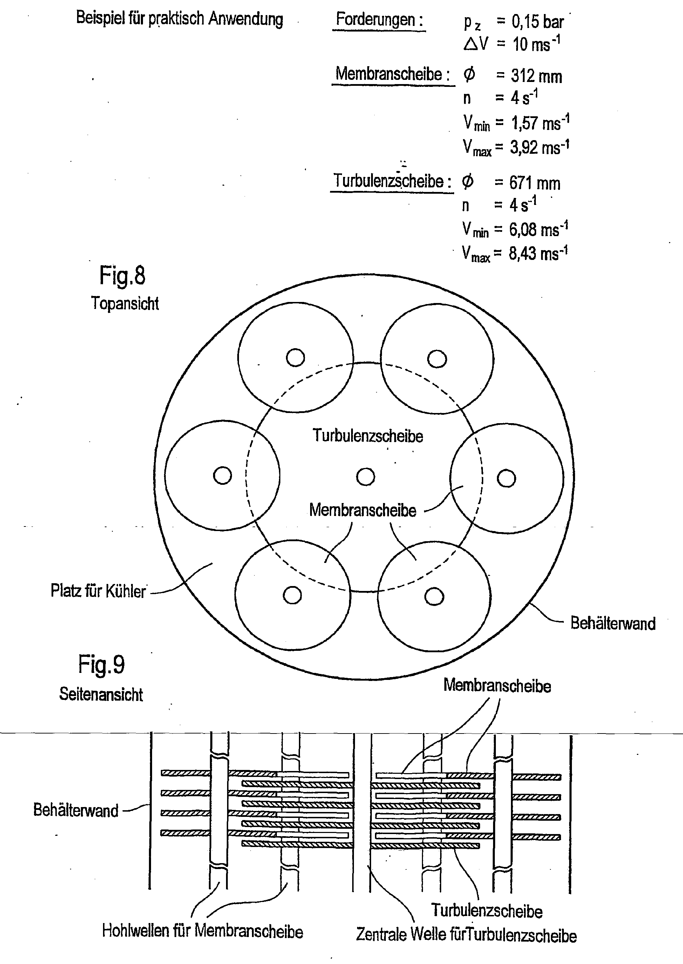

Die Figuren 8 und 9 veranschaulichen eine weitere Ausführungsform. Hierbei sind sechs Membranscheiben um eine Turbulenzscheibe herumgruppiert - wohl gemerkt immer wieder mit Überlappung. Figur 8 zeigt die Vorrichtung in Draufsicht, und Figur 9 in Seitenansicht. Die genannten Scheiben befinden sich in einem Behälter, dessen Inneres unter Druck steht.

**Patentansprüche**

1.   Verfahren zum Filtrieren eines Mediums unter Verwendung einer Vorrichtung mit den folgenden Merkmalen:

   1.1 mit wenigstens einer Membranscheibe;
   1.2 mit wenigstens einer Turbulenzscheibe, die der Turbulenzerzeugung dient;
   1.3 die beiden Scheiben sind drehbar gelagert;
   1.4 die beiden Scheiben sind wie folgt angeordnet:

      1.4.1 ihre Drehachsen verlaufen parallel zueinander;
      1.4.2 sie überlappen sich in Draufsicht,
      1.4.3 sie sind in axialer Richtung so beieinander angeordnet, dass die Turbulenzscheibe im Bereich der betreffenden Seitenfläche der Membranscheibe eine Turbulenz erzeugt;

   1.5 die Membranscheibe ist mit einer Hohlwelle drehfest verbunden;
   1.6 die Hohlwelle ist mit einem Hohlraum in der Membranscheibe leitend verbunden;
   1.7 die beiden Scheiben sind im selben Drehsinn an getrieben;
   1.8 der Durchmesser der Membranscheibe ist kleiner, als der Durchmesser der Turbulenzscheibe;

   das Verfahren ist **dadurch gekennzeichnet,**
   **dass** die Differenz der Umfangsgeschwindigkeiten der beiden Scheiben auf der Verbindungslinie zwischen ihren Drehachsen im Überlappungsbereich an jedem Punkt gleich groß ist.

2.   Verfahren nach Anspruch 1 mit den folgenden Merkmalen:

   2.1 es wird eine Mehrzahl von Membranscheiben und eine Mehrzahl von Turbulenzscheiben vorgesehen;
   2.2 die Scheiben werden derart angeordnet, dass jeweils eine Scheibe der einen Gattung in den Zwischenraum zwischen zwei andern der benachbarten Scheiben der anderen Gattung eingreift.

**Claims**

1.   Process for filtering a medium using a device having the following features:

   1.1 with at least one membrane disc;

1.2 with at least one turbulence disc used to produce the turbulence;

1.3 the two discs are mounted rotatably;

1.4 the two discs are arranged as follows:

1.4.1 the axes of rotation thereof extend parallel to one another;

1.4.2 they overlap in a top view,

1.4.3 they are positioned next to one another in the axial direction so that the turbulence disc produces turbulence in the region of the respective lateral surface of the membrane disc;

1.5 the membrane disc is rotationally engaged with a hollow shaft;

1.6 the hollow shaft is conductively connected to a cavity in the membrane disc;

1.7 the two discs are driven in the same direction of rotation;

1.8 the diameter of the membrane disc is smaller than the diameter of the turbulence disc;

the process is **characterised in that** the difference in the circumferential velocities of the two discs is the same at each point on the connecting line between the axes of rotation thereof in the overlap region.

**2.** Process according to claim 1 having the following features:

2.1 a plurality of membrane discs and a plurality of turbulence discs is provided;

2.2 the discs are positioned so that a respective disc of one type engages in the space between two others of the adjacent discs of the other type.

**Revendications**

**1.** Procédé de filtrage d'un fluide utilisant un dispositif présentant les caractéristiques suivantes :

1.1 au moins un disque à membrane ;

1.2 au moins un disque de turbulence qui sert à produire une turbulence ;

1.3 les deux disques sont logés de manière à pivoter;

1.4 les deux disques sont disposés comme suit :

1.4.1 leurs axes rotatifs s'étendent parallèlement l'un par rapport à l'autre;

1.4.2 ils se chevauchent en vue de dessus;

1.4.3 ils sont disposés l'un à côté de l'autre dans le sens axial de sorte que le disque de turbulence produise une turbulence dans la zone de la surface latérale concernée du disque à membrane ;

1.5 le disque à membrane est relié de manière fixe à un arbre creux ;

1.6 l'arbre creux est relié de manière à guider à une cavité dans le disque à membrane ;

1.7 les deux disques sont entraînés dans le même sens de rotation;

1.8 le diamètre du disque à membrane est plus petit que celui du disque à turbulence ;

le procédé est **caractérisé en ce que** la différence des vitesses circonférentielles des deux disques sur la ligne de jonction entre leurs axes rotatifs est égale en chaque point dans la zone de chevauchement.

**2.** Procédé selon la revendication 1 présentant les caractéristiques suivantes :

2.1 une multitude de disques à membrane et une multitude de disques de turbulence sont prévues ;

2.2 les disques sont disposés de telle sorte qu'un disque de l'une des sortes s'engage dans l'espace intermédiaire entre deux autres disques contigus de l'autre sorte.

Fig.1

90mm

Fig.2

312mm

Fig.3    Membranscheibe

312mm

Turbulenzscheibe

62,5mm

156mm

$r_{max} = 93,5mm$

$r_{max} = 534,4mm$

Membranscheibe $\phi$ 312mm       Turbulenzscheibe

$n = 4\,s^{-1}$

$V_{min} = 1,57\,ms^{-1}$

$V_{max} = 3,92\,ms^{-1}$

$n = 4$

$V_{min} = 4,08\,ms^{-1}$

$V_{max} = 6,43\,ms^{-1}$

$\phi = 512\,mm$

6,43    4,08

$\triangle V = 8\,m/s$

**Fig.4**

$n = 3,4$

$V_{min} = 6,43\,ms^{-1}$

$V_{max} = 8,43\,ms^{-1}$

$\phi = 788\,mm$

8,43    6,43

$\triangle V = 10\,m/s$

**Fig.5**

$n = 4$

$V_{min} = 11,08\,ms^{-1}$

$V_{max} = 13,43\,ms^{-1}$

$\phi = 1070\,mm$

13,43    11,08

$\triangle V = 15\,m/s$

**Fig.6**

$n = 3,4$

$V_{min} = 16,43\,ms^{-1}$

$V_{max} = 18,43\,ms^{-1}$

$\phi = 1724\,mm$

18,43    16,43

$\triangle V = 20\,m/s$

**Fig.7**

Beispiel für praktisch Anwendung

<u>Forderungen :</u> $p_z$ = 0,15 bar

$\triangle V$ = 10 ms$^{-1}$

<u>Membranscheibe :</u> $\phi$ = 312 mm

$n$ = 4 s$^{-1}$

$V_{min}$ = 1,57 ms$^{-1}$

$V_{max}$ = 3,92 ms$^{-1}$

<u>Turbulenzscheibe :</u> $\phi$ = 671 mm

$n$ = 4 s$^{-1}$

$V_{min}$ = 6,08 ms$^{-1}$

$V_{max}$ = 8,43 ms$^{-1}$

# Fig.8
## Topansicht

Turbulenzscheibe

Membranscheibe

Platz für Kühler

Behälterwand

# Fig.9
## Seitenansicht

Membranscheibe

Behälterwand

Hohlwellen für Membranscheibe

Turbulenzscheibe

Zentrale Welle für Turbulenzscheibe

11